# EUROPÄISCHE PATENTSCHRIFT

(11) **EP 3 348 671 B1**
(45) Veröffentlichungstag und Bekanntmachung des Hinweises auf die Patenterteilung: **21.04.2021**
(21) Anmeldenummer: 17151463.1
(22) Anmeldetag: 13.01.2017
(51) Int. Cl.: C25B 1/02, C25B 9/08, C25B 15/08, B64G 1/42

(54) **RAUMFLUGKÖRPER MIT EINER ANTRIEBSSTOFFERZEUGUNGSVORRICHTUNG**
SPACE CRAFT HAVING A FUEL PRODUCTION APPARATUS
ENGIN SPATIAL AVEC UN APPAREIL DE PRODUCTION D'UN CARBURANT

(43) Veröffentlichungstag der Anmeldung: 18.07.2018
(73) Patentinhaber: Airbus Defence and Space GmbH, 82024 Taufkirchen (DE)
(72) Erfinder: Jehle, Walter, 88263 Horgenzell (DE); Reuck, Hans, 10409 Berlin (DE)
(74) Vertreter: Daub, Thomas

(56) Entgegenhaltungen:
- US-A- 3 905 884
- US-A1- 2014 224 668
- US-A1- 2014 363 757
- Wim De Groot ET AL: "Electrolysis propulsion for spacecraft applications", 33rd Joint Propulsion Conference and Exhibit, 6 July 1997 (1997-07-06), XP055556467, Reston, Virigina DOI: 10.2514/6.1997-2948

## Beschreibung

### Stand der Technik

Die Erfindung betrifft einen Raumflugkörper mit einer Antriebsstofferzeugungsvorrichtung. Es ist bereits eine Antriebsstofferzeugungsvorrichtung für einen Raumflugkörper vorgeschlagen worden. Aus der US 3 905 884 ist bereits eine Antriebserzeugungsvorrichtung für einen Raumflugkörper mit einem Elektrolyseur, welcher zu einer Erzeugung von Wasserstoff und Sauerstoff vorgesehen ist, bekannt. Ferner sind aus der US 2014/363757 A1 sowie aus der US 2014/224668 A1 jeweils Vorrichtungen mit einem Elektrolyseur, welcher zu einer Erzeugung von Wasserstoff vorgesehen ist, bekannt. Die XP 055556467 offenbart zudem eine Antriebsstofferzeugungsvorrichtung für einen Raumflugkörper mit einem Elektrolyseur zur Erzeugung von Wasserstoff und Sauerstoff im Zusammenhang mit einem Einsatz von Schubdüsen zu einer Manövrierung des Raumflugkörpers.

Die Aufgabe der Erfindung besteht insbesondere darin, eine gattungsgemäße Vorrichtung mit verbesserten Eigenschaften hinsichtlich einer einfachen und schnellen Vor-Ort-Erzeugung von Antriebsstoff für einen Raumflugkörper bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung schlägt einen Raumflugkörper, insbesondere einen Satelliten, mit einer Antriebsstofferzeugungsvorrichtung vor, mit zumindest einem Elektrolyseur, welcher zu einer wiederkehrenden Erzeugung von Wasserstoff und Sauerstoff vorgesehen ist und zumindest eine Elektrolysezelle aufweist, die zumindest einen alkalischen Elektrolyten umfasst. Bei dem Elektrolyseur wird unter Energieaufnahme durch einen elektrischen Strom Wasser in molekularen Sauerstoff und molekularen Wasserstoff gespalten. Unter einem "Raumflugkörper" soll in diesem Zusammenhang insbesondere ein von Menschenhand geschaffener Flugkörper für den Weltraum verstanden werden. Es sind verschiedene, einem Fachmann als sinnvoll erscheinende Raumflugkörper denkbar, wie beispielsweise Raketen, Raumsonden, Raumfähren, Raumschiffe, Raumkapseln, Raumstationen und/oder besonders bevorzugt Satelliten. Unter "periodisch" soll in diesem Zusammenhang wiederkehrend verstanden werden. Vorzugsweise kann darunter sowohl zyklisch, als auch besonders bevorzugt azyklisch wiederkehrend verstanden werden. Besonders bevorzugt soll darunter insbesondere von Zeit zu Zeit, phasenhaft wiederkehrend verstanden werden. Unter einer "Elektrolysezelle" soll in diesem Zusammenhang insbesondere eine Einheit mit zumindest zwei Elektroden verstanden werden, wovon vorzugsweise eine als eine Wasserstoffelektrode und eine als eine Sauerstoffelektrode ausgebildet ist, mit einem die zwei Elektroden verbindenden Stromkreis, mit zumindest einem zumindest zwischen den zwei Elektroden angeordneten Elektrolyt und/oder mit einer zumindest zwischen den zwei Elektroden angeordneten elektrolytgefüllten oder ionenleitenden Membran verstanden werden. Die Einheit ist zu einer Durchführung einer Redox-Reaktion vorgesehen, bei der unter Aufwendung von Energie in Form von elektrischer Leistung Wasser zu einer Erzeugung von einem erste Gas, nämlich molekularem Wasserstoff, und einem zweiten Gas, nämlich molekularem Sauerstoff gespalten wird. Unter einem "Elektrolyten" soll insbesondere ein ionenleitender Stoff, vorzugsweise in Form einer Lösung, beispielsweise einer alkalischen Lösung, verstanden werden. Ferner sind verschiedene, einem Fachmann als sinnvoll erscheinende alkalische Elektrolyten denkbar, wie beispielsweise eine Kaliumhydroxid-Lösung und/oder eine Hydrazin-Lösung. Unter "vorgesehen" soll speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Durch die erfindungsgemäße Ausgestaltung der Antriebsstofferzeugungsvorrichtung kann insbesondere eine Vorrichtung bereitgestellt werden, mit welcher vorteilhaft einfach periodisch Wasserstoff und Sauerstoff, insbesondere unter Druck, für Antriebe, insbesondere für einen Raumflugkörper, zur Verfügung gestellt werden kann. Es werden insbesondere vorteilhaft wenig aktive Komponenten benötigt. Vorzugsweise kann dadurch insbesondere eine vorteilhaft einfache und schnelle Vor-Ort-Erzeugung von einem Antriebsstoff für einen Raumflugkörper erreicht werden. Dadurch kann insbesondere ein umweltfreundliches Antriebssystem für Raumflugkörper, als "grüne Systeme" auf Basis von Wasser bereitgestellt werden. Hierzu wird das Wasser insbesondere elektrolysiert und die Bestandteile Wasserstoff und Sauerstoff insbesondere bei erhöhtem Druck dem Antriebssystem zur Verfügung gestellt. Diese Systeme sollten klein, leicht und zuverlässig sein. Das bedeutet den Einsatz möglichst einfacher, passiver Komponenten und den Verzicht auf Sensoren, Regelkomponenten, Pumpen zu Kühlung, Kompressoren und Wasserpumpen. In der Regel wird ein solches Antriebssystem nicht häufig gebraucht, d.h. es wird über die Jahre lediglich mehrere hundert- bis mehrere tausendmal unregelmäßig wiederholt betrieben.

Ferner wird vorgeschlagen, dass die zumindest eine Elektrolysezelle von einer Matrixzelle gebildet ist. Unter einer "Matrixzelle" soll in diesem Zusammenhang insbesondere eine Elektrolysezelle verstanden werden, bei welcher die Elektrolyten in einer Matrix, vorzugsweise in einer porösen, feinporigen Matrix, fixiert sind. Vorzugsweise ist die Matrix mit den Elektrolyten insbesondere an zumindest einer der Elektroden der Elektrolysezelle angeordnet. Dadurch kann insbesondere eine besonders vorteilhafte Elektrolysezelle bereitgestellt werden. Es kann insbesondere eine vorteilhaft passive Elektrolysezelle mit wenig aktiven Komponenten bereitgestellt werden.

Der zumindest eine Elektrolyseur weist zumindest ein Wasserreservoir auf, welcher zu einer Zwischenspeicherung von Wasser für einen Elektrolyseprozesszyklus vorgesehen ist. Vorzugsweise weist die Elektrolysezelle das zumindest eine Wasserreservoir auf. Das zumindest eine Wasserreservoir ist zu einer Zwischenspeicherung genau der Menge an Wasser vorgesehen, wie sie für einen Elektrolyseprozesszyklus benötigt wird. Vorzugsweise fasst das Wasserreservoir weniger als 50 g, vorzugsweise weniger als 30 g und besonders bevorzugt weniger als 10 g Wasser. Unter einem "Wasserreservoir" soll in diesem Zusammenhang insbesondere eine Einheit zur Bevorratung, insbesondere zur Zwischenspeicherung, von Wasser verstanden werden. Es sind verschiedene, einem Fachmann als sinnvoll erscheinende Reservoirs denkbar, wie beispielsweise Behälter, Tanks und/oder Speicher. Dadurch kann insbesondere eine direkte Bereitstellung von Wasser für die Elektrolyse erreicht werden. Es kann insbesondere eine definierte Menge an Wasser für die Elektrolyse bereitgestellt werden.

Die Antriebstofferzeugungsvorrichtung weist zumindest ein erstes Druckausgleichsventil auf, welches über eine Leitung mit dem Wasserreservoir und mit einer Wasserstoffleitung verbunden ist und zu einem Druckausgleich zwischen Wasser und Wasserstoff vorgesehen ist. Vorzugsweise ist das Druckausgleichsventil dazu vorgesehen, einen Druck zwischen dem Wasserreservoir und der Wasserstoffleitung auszugleichen. Dadurch kann insbesondere zuverlässig ein Druck des Wassers in dem Wasserreservoir und/oder des Wasserstoffs in der Wasserstoffleitung eingestellt werden. Vorzugsweise kann ein Druck des Wassers in dem Wasserreservoir und/oder des Wasserstoffs in der Wasserstoffleitung vorteilhaft passiv eingestellt werden. Es kann eine zuverlässige Einstellung eines Drucks erreicht werden.

Die Antriebsstofferzeugungsvorrichtung weist zumindest einen ersten Speichertanks zu einer Speicherung eines erzeugten Wasserstoffs und zumindest eines zweiten Speichertanks zu einer Speicherung eines erzeugten Sauerstoffs auf. Vorzugsweise können die produzierten Gase bei Bedarf für Schubdüsen des Raumflugkörpers aus den Speichertanks entnommen werden. Dadurch kann eine vorteilhafte Aufbewahrung der Gase erreicht werden. Es kann insbesondere eine langfristige Bereitstellung der Gase erreicht werden.

Ferner geht die Erfindung aus von einem Verfahren zu einem Betrieb der Antriebsstofferzeugungsvorrichtung. Vorzugsweise wird vorgeschlagen, dass zu Beginn eines Elektrolyseprozesszyklus eine definierte Menge an Wasser in ein Wasserreservoir eines Elektrolyseurs der Antriebsstofferzeugungsvorrichtung eingebracht wird. Unter einem "Elektrolyseprozesszyklus" soll in diesem Zusammenhang insbesondere ein definierter Prozesszyklus des Elektrolyseurs verstanden werden, in welchem der Elektrolyseur Wasserstoff und Sauerstoff erzeugt. Vorzugsweise soll darunter insbesondere ein definierter, periodisch durchgeführter Betriebszyklus verstanden werden. Besonders bevorzugt dauert der Elektrolyseprozesszyklus eine definierte Zeit an. Dadurch kann insbesondere vorteilhaft definiert, periodisch eine definierte Menge Wasserstoff und Sauerstoff, insbesondere unter Druck, für Antriebe, insbesondere für den Raumflugkörper, zur Verfügung gestellt werden.

Des Weiteren wird vorgeschlagen, dass das Wasser aus dem Wasserreservoir des Elektrolyseurs bei niedrigem Druck der Elektrolysezelle zugeführt wird. Unter "niedrigem Druck" soll in diesem Zusammenhang insbesondere ein Druck verstanden werden, welcher zumindest annähernd einem Umgebungsdruck entspricht. Bevorzugt beträgt eine Abweichung des Drucks von dem Umgebungsdruck maximal 2 bar, vorzugsweise maximal 1,5 bar und besonders bevorzugt maximal 1 bar. Vorzugsweise soll darunter insbesondere ein Druck mit einem absoluten Druck von maximal 2 bar, vorzugsweise maximal 1,5 bar und besonders bevorzugt maximal 1 bar verstanden werden. Hierdurch kann vorteilhaft einfach mit einem geringen Energiebedarf ein Zuführen des Wassers erreicht werden. Ist der Druck in der Elektrolysezelle gering, also nahe einem Umgebungsdruck, kann das Wasser insbesondere lediglich mit einem geringen Überdruck der Elektrolysezelle zugeführt werden.

Es wird ferner vorgeschlagen, dass ein Elektrolyseprozess des Elektrolyseprozesszyklus selbsttätig beendet wird, wenn das Wasser in das Wasserreservoir des Elektrolyseurs aufgebracht ist. Dadurch kann insbesondere vorteilhaft definiert, periodisch eine definierte Menge Wasserstoff und Sauerstoff, insbesondere unter Druck für Antriebe, insbesondere für den Raumflugkörper, zur Verfügung gestellt werden. Dadurch kann vorteilhaft einfach ein definierter Elektrolyseprozesszyklus bereitgestellt werden. Vorzugsweise kann insbesondere vorteilhaft sicher eine selbsttätige Beendigung des Elektrolyseprozesszyklus erreicht werden.

Es wird weiter vorgeschlagen, dass während des Elektrolyseprozesszyklus Wasserstoff und Sauerstoff mit einem Druck von zumindest 30 bar erzeugt werden. Vorzugsweise wird während des Elektrolyseprozesszyklus Wasserstoff und Sauerstoff mit einem Druck von zumindest 50 bar erzeugt. Besonders bevorzugt wird während des Elektrolyseprozesszyklus Wasserstoff und Sauerstoff mit einem Druck von maximal 100 bar erzeugt. Vorzugsweise wird der Wasserstoff und der Sauerstoff ab einem definierten Druck in der Elektrolysezelle in die Speichertanks überführt. Dadurch kann insbesondere Wasserstoff und Sauerstoff mit einem vorteilhaft hohen Druck bereitgestellt werden. Vorzugsweise können die Gase insbesondere ohne eine zusätzliche, aktive Druckerhöhung gespeichert werden. Es kann insbesondere eine Anzahl aktiver Komponenten gering gehalten werden.

Ferner wird vorgeschlagen, dass die während eines Elektrolyseprozesszyklus erzeugten Gase in Speichertanks geführt werden. Vorzugsweise werden die während des Elektrolyseprozesszyklus erzeugten Gase ab einem definierten Druck in Speichertanks geführt. Bevorzugt werden die Gase insbesondere ohne eine zusätzliche, aktive Druckerhöhung in die Speichertanks geführt. Dadurch kann eine vorteilhafte Aufbewahrung der Gase erreicht werden. Es kann insbesondere eine langfristige Bereitstellung der Gase erreicht werden.

Des Weiteren wird vorgeschlagen, dass nach einem Elektrolyseprozess eine Wasserstoffleitung des Elektrolyseurs mit einer Sauerstoffleitung des Elektrolyseurs verbunden wird, und die Restgase in eine Umgebung abgelassen werden. Vorzugsweise wird nach einem Elektrolyseprozess die Wasserstoffleitung des Elektrolyseurs mit der Sauerstoffleitung des Elektrolyseurs gekoppelt. Eine Kopplung erfolgt insbesondere zu einem Druckausgleich zwischen der Wasserstoffleitung und der Sauerstoffleitung, um die Gase, ohne dass ein Differenzdruck entsteht, abzulassen. Vorzugsweise wird die Elektrolysezelle über die Wasserstoffleitung und die Sauerstoffleitung bis maximal Umgebungsdruck entlüftet. Bevorzugt erfolgt eine Entlüftung über ein Ventil. Dadurch kann zuverlässig ein Druck in der Elektrolysezelle für einen nächsten Elektrolyseprozesszyklus abgesenkt werden. Ist der Druck in der Elektrolysezelle gering, also nahe einem Umgebungsdruck, kann das Wasser insbesondere lediglich mit einem geringen Überdruck der Elektrolysezelle zugeführt werden. Vorzugsweise kann dadurch ein Energiebedarf des Elektrolyseurs gering gehalten werden.

Es wird ferner vorgeschlagen, dass ein Elektrolyseprozesszyklus gestartet wird, wenn genügend Energie für einen Elektrolyseprozesszyklus vorhanden ist und ausreichend Platz in den Speichertanks der Antriebsstofferzeugungsvorrichtung vorhanden ist. Vorzugsweise wird ein Elektrolyseprozesszyklus gestartet, wenn in einem Energiespeicher der Antriebsstofferzeugungsvorrichtung ein Energieschwellwert überschritten wird und ein Schwellwert eines Drucks in den Speichertanks unterschritten wird. Vorzugsweise wird der Elektrolyseprozesszyklus dabei selbsttätig gestartet. Hierdurch kann insbesondere gewährleistet werden, dass ständig ausreichend Gas in den Speichertanks vorhanden ist. Vorzugsweise kann dadurch ferner erreicht werden, dass die Gase nicht direkt produziert werden müssen, wenn Antriebsstoff benötigt wird. Es kann insbesondere eine vorteilhaft autonome Antriebsstofferzeugungsvorrichtung bereitgestellt werden.

Zudem wird vorgeschlagen, dass die Durchführung unter Bedingungen reduzierter oder erhöhter Schwerkraft erfolgt. Vorzugsweise soll dieses Verfahren im Weltraum angewandt werden, wie beispielsweise bei µg in einem Raumflugkörper, wie beispielsweise einem Raumschiff oder Satelliten, einem Prozess in einem Raumflugkörper bei Beschleunigungen von 10⁻⁶ xg bis 10 xg, auf einem Planeten, wie dem Mars, und/oder auf einem Trabanten, wie dem Mond. Die g-Werte sind dabei insbesondere auf einem Planeten und/oder einem Asteroiden oder in einem fliegenden Raumflugkörper zu verstehen. Grundsätzlich kann jedoch ein g-Wert verfahrenstechnisch drastisch erhöht werden, wie beispielsweise auf 100 xg. Beispielsweise können eine Anlage und/oder ein Reaktor einer künstlichen Prozessbeschleunigung ausgesetzt sein, welche von den angegebenen g-Werten abweicht. Unter "Bedingungen reduzierter Schwerkraft" sollen insbesondere Bedingungen verstanden werden, bei denen eine Schwerewirkung von maximal 0,9 xg, vorteilhaft von minimal bis 1 *10⁻³ xg, vorzugsweise von minimal bis 1*10⁻⁶ xg und besonders bevorzugt von minimal bis 1*10⁻⁸ xg, wirksam ist. Ferner sollen unter "Bedingungen erhöhter Schwerkraft" insbesondere Bedingungen verstanden werden, bei denen eine Schwerewirkung von zumindest 1,1 xg, vorzugsweise bis maximal 10 xg, wirksam ist. Die Schwerewirkung kann durch Gravitation und/oder künstlich durch eine Beschleunigung erzeugt sein. Die g-Werte können grundsätzlich verfahrenstechnisch drastisch erhöht werden. Mit "g" ist der Wert der Fallbeschleunigung auf der Erde von 9,81 m/s² bezeichnet.

Die erfindungsgemäße Antriebsstofferzeugungsvorrichtung, der Raumflugkörper sowie das Verfahren sollen hierbei nicht auf die oben beschriebene Anwendung und Ausführungsform beschränkt sein. Insbesondere können die erfindungsgemäße Antriebsstofferzeugungsvorrichtung, der Raumflugkörper sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Raumflugkörper mit einer erfindungsgemäßen Antriebsstofferzeugungsvorrichtung und mit einer Antriebseinheit in einer schematischen Darstellung,
- Fig. 2: die erfindungsgemäße Antriebsstofferzeugungsvorrichtung mit einem Elektrolyseur, welcher eine Elektrolysezelle aufweist, und mit zwei Speichertanks in einer schematischen Darstellung,
- Fig. 3: die Elektrolysezelle des Elektrolyseurs mit einem integrierten Wasserreservoir in einer schematischen Explosionsschnittdarstellung,
- Fig. 4: ein schematisches Ablaufdiagramm eines Verfahrens zu einem Betrieb der erfindungsgemäßen Antriebsstofferzeugungsvorrichtung und
- Fig. 5: ein Diagramm eines Messprotokolls der Drücke, des fließenden Stroms und der anliegenden Spannung der Elektrolysezelle über die Zeit während eines Elektrolyseprozesszyklus.

### Beschreibung des Ausführungsbeispiels

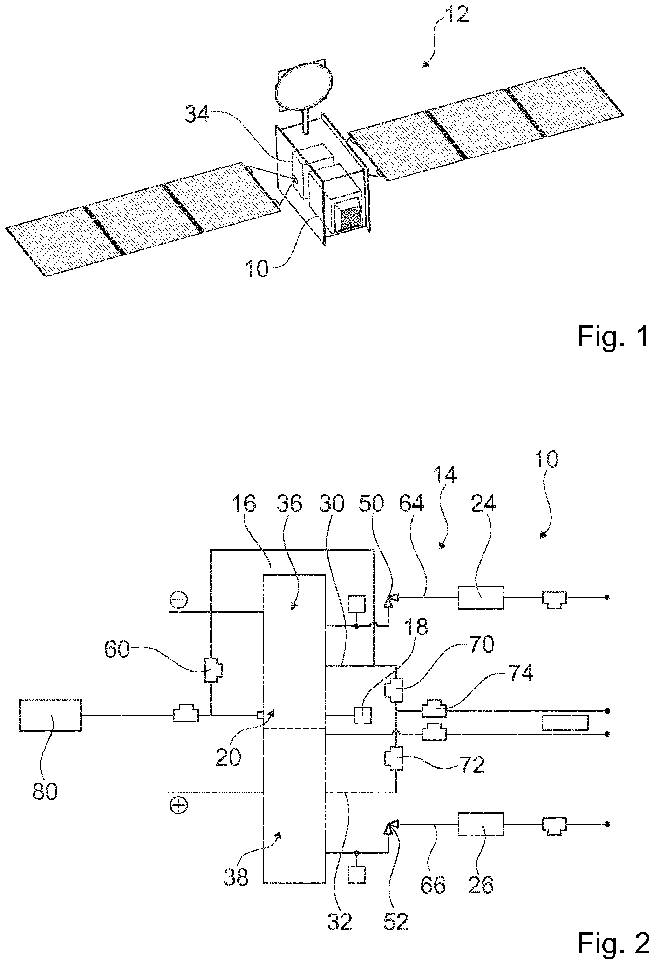

Figur 1 zeigt ein Raumflugkörper 12. Der Raumflugkörper 12 ist von einem Satelliten gebildet. Grundsätzlich wäre jedoch auch eine andere, einem Fachmann als sinnvoll erscheinende Ausgestaltung des Raumflugkörpers 12 denkbar, wie beispielsweise als Rakete, Raumsonde, Raumfähre, Raumschiff, Raumkapsel und/oder Raumstation. Der Raumflugkörper 12 ist zu einer Verwendung im Weltraum, unter Bedingungen reduzierter oder erhöhter Schwerkraft vorgesehen. Der Raumflugkörper 12 weist eine Antriebsstofferzeugungsvorrichtung 10 auf. Ferner weist der Raumflugkörper 12 eine Antriebseinheit 34 auf. Die Antriebseinheit 34 dient zu einer Manövrierung des Raumflugkörpers 12 im Weltraum. Die Antriebseinheit 34 umfasst zumindest eine, nicht weiter sichtbare Schubdüse. Die Antriebseinheit 34 wird mit Wasserstoff und Sauerstoff betrieben.

Die Antriebsstofferzeugungsvorrichtung 10 ist für den Raumflugkörper 12 vorgesehen. Die Antriebsstofferzeugungsvorrichtung 10 weist einen Elektrolyseur 14 auf. Der Elektrolyseur 14 ist zu einer periodischen Erzeugung von Wasserstoff und Sauerstoff vorgesehen. Der Elektrolyseur 14 ist zu einer wiederkehrenden Erzeugung von Wasserstoff und Sauerstoff vorgesehen. Der Elektrolyseur 14 ist dazu vorgesehen, unter Energieaufnahme durch einen elektrischen Strom Wasser in molekularen Sauerstoff und molekularen Wasserstoff zu spalten. Der Elektrolyseur 14 weist eine Elektrolysezelle 16 auf (Figur 2).

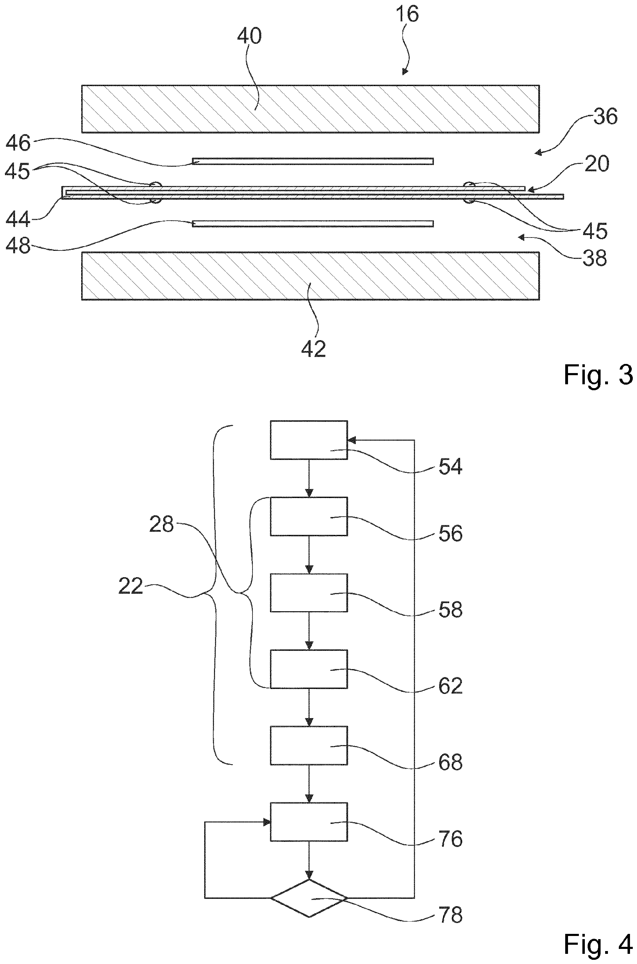

Die Elektrolysezelle 16 ist von einer Matrixzelle gebildet. Die Elektrolysezelle 16 bildet zwei Fluidräume 36, 38 aus. Die Elektrolysezelle 16 bildet einen Fluidraum 36 für den Wasserstoff und einen Fluidraum 38 für den Sauerstoff aus. Die zwei Fluidräume 36, 38 sind teilweise voneinander getrennt. Ferner weist die Elektrolysezelle 16 zwei Wandelemente 40, 42 auf, welche jeweils einen der Fluidräume 36, 38 nach außen hin begrenzen. Die Wandelemente 40, 42 sind dazu vorgesehen, die Fluidräume 36, 38 gegen einen Gasaustausch gegenüber einer Umgebung abzuschließen. Die Wandelemente 40, 42 sind jeweils scheibenförmig ausgebildet. Die Wandelemente 40, 42 sind jeweils von einem Flansch gebildet. Die Wandelemente 40, 42 bestehen aus einem elektrisch isolierenden Material. Grundsätzlich wäre jedoch auch eine andere, einem Fachmann als sinnvoll erscheinende Ausgestaltung der Wandelemente 40, 42 denkbar. Des Weiteren weist die Elektrolysezelle 16 einen Rahmen 44 auf. Der Rahmen 44 ist zwischen den beiden Fluidräumen 36, 38 angeordnet. Der Rahmen 44 weist ein integriertes, nicht weiter sichtbares Diaphragma aus. Das Diaphragma bildet eine Membran aus, die in axialer Richtung zwischen einem ersten Fluidraum 36 und einem zweiten Fluidraum 38 angeordnet ist. Die Membran dient zu einer Aufnahme von Elektrolyten 18. Die Elektrolysezelle 16 umfasst alkalische Elektrolyten 18. Ferner weist der Rahmen 44 integrierte Dichtungen 45 auf. Die Dichtungen 45 sind jeweils von einer erhabenen Dichtkontur gebildet, die dazu vorgesehen ist, eine Dichtwirkung bereitzustellen. Die Dichtungen 45 sind jeweils dazu vorgesehen, ein gegenüberliegendes Wandelement 40, 42 zu kontaktieren, um die Fluidräume 36, 38 abzudichten. Die Dichtungen 45 sind jeweils dazu vorgesehen, gegen die Wandelemente 40, 42 verpresst zu werden. Die Dichtungen 45 sind einstückig mit einem Rest des Rahmens 44 verbunden. Des Weiteren weist die Elektrolysezelle 16 zwei Elektroden 46, 48 auf, welche eine Kathode und eine Anode ausbilden. Die Elektroden 46, 48 sind jeweils in einem der Fluidräume 36, 38 angeordnet. Die Elektroden 46, 48 grenzen auf gegenüberliegenden Seiten an den Rahmen 44 an (Figur 3).

Des Weiteren sind die beiden Fluidräume 36, 38 über eine Wasserstoffleitung 30 und eine Sauerstoffleitung 32 verbindbar.

Ferner weist der Elektrolyseur 14 ein Wasserreservoir 20 auf, welches zu einer Zwischenspeicherung von Wasser für einen Elektrolyseprozesszyklus 22 vorgesehen ist. Das Wasserreservoir 20 ist zu einer Zwischenspeicherung genau der Menge an Wasser vorgesehen, wie sie für einen Elektrolyseprozesszyklus 22 benötigt wird. Das Wasserreservoir 20 fasst weniger als 50 g, vorzugsweise weniger als 30 g und besonders bevorzugt weniger als 10 g Wasser. Das Wasserreservoir 20 fasst beispielhaft 5 g Wasser. Das Wasserreservoir 20 ist in den Rahmen 44 der Elektrolysezelle 16 integriert. Das Wasserreservoir 20 ist mit dem nicht weiter sichtbaren Diaphragma des Rahmens 44 verbunden (Figur 3). Das Wasserreservoir 20 wird aus einem Wasserspeicher 80 heraus befüllt.

Des Weiteren weist die Antriebsstofferzeugungsvorrichtung 10 einen ersten Speichertank 24 zu einer Speicherung eines erzeugten Wasserstoffs und einen zweiten Speichertank 26 zu einer Speicherung eines erzeugten Sauerstoffs auf. Der erste Speichertank 24 ist über eine zweite Wasserstoffleitung 64 des Elektrolyseurs 14 mit dem ersten Fluidraum 36 der Elektrolysezelle 16 verbunden. Zwischen dem ersten Fluidraum 36 und dem ersten Speichertank 24 ist ein Überdruckventil 50 in der zweiten Wasserstoffleitung 64 angeordnet. Ferner ist der zweite Speichertank 26 über eine zweite Sauerstoffleitung 66 des Elektrolyseurs 14 mit dem zweiten Fluidraum 38 der Elektrolysezelle 16 verbunden. Zwischen dem zweiten Fluidraum 38 und dem zweiten Speichertank 26 ist ein Überdruckventil 52 in der zweiten Sauerstoffleitung 66 angeordnet (Figur 2). Grundsätzlich ist auch eine Konfiguration möglich, bei welche keine Speichertanks verwendet und die erzeugten Gase direkt verwendet werden.

Figur 4 zeigt ein schematisches Ablaufdiagramm eines Verfahrens zu einem Betrieb der Antriebsstofferzeugungsvorrichtung 10. Bei dem Verfahren werden in unregelmäßigen Abständen Elektrolyseprozesszyklen 22 durchgeführt. Die Durchführung des Verfahrens erfolgt unter Bedingungen reduzierter oder erhöhter Schwerkraft. Die Durchführung des Verfahrens erfolgt im Weltraum. Die Durchführung des Verfahrens erfolgt im Weltraum direkt in dem Raumflugkörper 12. Zu Beginn eines Elektrolyseprozesszyklus 22 wird in einem ersten Verfahrensschritt 54 eine definierte Menge an Wasser in das Wasserreservoir 20 des Elektrolyseurs 14 der Antriebsstofferzeugungsvorrichtung 10 eingebracht. Zum Beispiel werden 5 g Wasser pro Zyklus zugegeben. Wenn das Wasser in dem Wasserreservoir 20 des Elektrolyseurs 14 ist, kann in einem weiteren Verfahrensschritt 56 eine Spannung an die Elektroden 46, 48 angelegt werden und der eigentliche Elektrolyseprozess 28 beginnt. Bei dem Elektrolyseprozess 28 entsteht Wasserstoff und Sauerstoff. Das Wasser aus dem Wasserreservoir 20 des Elektrolyseurs 14 wird bei niedrigem Druck der Elektrolysezelle 16 zugeführt. Mit dem Beginn des Elektrolyseprozesses 28 wird ferner ein erstes Druckausgleichsventil 60 geöffnet damit ein Druckausgleich zwischen Wasser und Wasserstoff stattfinden kann. Die Antriebstofferzeugungsvorrichtung 10 weist das erste Druckausgleichsventil 60 auf. Das erste Druckausgleichsventil 60 ist über eine Leitung mit dem Wasserreservoir 20 und mit der Wasserstoffleitung 30 verbunden. Das erste Druckausgleichsventil 60 ist zu einem Druckausgleich zwischen Wasser und Wasserstoff vorgesehen. Die Wasserstoffleitung 30 ist ferner mit dem ersten Fluidraum 36 verbunden. Der Elektrolyseur 14 weist das erste Druckausgleichsventil 60 auf. Während des Elektrolyseprozesszyklus 22 werden Wasserstoff und Sauerstoff mit einem Druck von zumindest 30 bar erzeugt. Während des Elektrolyseprozesszyklus 22 werden Wasserstoff und Sauerstoff mit einem Druck von 50 bar erzeugt. Während des Elektrolyseprozesses 28 erhöht sich der Druck in der Elektrolysezelle 16, bis die Überdruckventile 50, 52 in einem weiteren Verfahrensschritt 58 bei einem definierten Druck öffnen. Die Überdruckventile 50, 52 öffnen beispielhaft bei 50 bar. Durch das Öffnen der Überdruckventile 50, 52 werden die produzierten Gase in die vorgesehenen Speichertanks 24, 26 geführt. Die während des Elektrolyseprozesszyklus 22 erzeugten Gase werden daher in die Speichertanks 24, 26 geführt. Aus diesen Speichertanks 24, 26 entnimmt die Antriebseinheit 34 über eine weitere Leitung bei Bedarf Gas für die Schubdüse . Der Elektrolyseprozess 28 endet in einem weiteren Verfahrensschritt 62 selbsttätig wenn das Wasser in dem Wasserreservoir 20 verbraucht ist. Der Elektrolyseprozess 28 des Elektrolyseprozesszyklus 22 wird selbsttätig beendet, wenn das Wasser in das Wasserreservoir 20 des Elektrolyseurs 14 aufgebracht ist. Dabei steht die Elektrolysezelle 16 noch unter Druck. Daher wird anschließend in einem weiteren Verfahrensschritt 68 die Wasserstoffleitung 30 mit der Sauerstoffleitung 32 verbunden und anschließend die Gase in eine Umgebung abgelassen. Nach dem Elektrolyseprozess 28 wird daher die Wasserstoffleitung 30 des Elektrolyseurs 14 mit der Sauerstoffleitung 32 des Elektrolyseurs 14 verbunden und die Restgase werden in eine Umgebung abgelassen. Die Kopplung der Wasserstoffleitung 30 und der Sauerstoffleitung 32 erfolgt zum Druckausgleich zwischen den Leitungen, um die Gase ohne dass ein Differenzdruck entsteht abzulassen. Die Kopplung erfolgt durch ein Öffnen von zwei Verbindungsventilen 70, 72, welche die Wasserstoffleitung 30 und die Sauerstoffleitung 32 verbinden. Über ein weiteres Ventil 74 kann die Restgase gemeinsam in einer Umgebung abgelassen werden. Dabei wird die Elektrolysezelle 16 bis maximal Umgebungsdruck entlüftet. Es handelt sich hierbei nur um eine geringe Menge von Gasen die entweichen, da das Volumen der Fluidräume 36, 38 in der Elektrolysezelle 16 konstruktiv sehr klein gehalten sind. Nach der Entlüftung ist der Elektrolyseprozesszyklus 22 abgeschlossen. Anschließend kann das Wasserreservoir 20 neu mit Wasser befüllt werden. Der Druck in den Fluidräumen 36, 38 der Elektrolysezelle 16 ist in diesem Zustand gering, also nahe einem Umgebungsdruck, sodass mit geringem Überdruck das Wasser in das Wasserreservoir 20 befördert werden kann. Nach einem abgeschlossenen Elektrolyseprozesszyklus 22 kann daher ein neuer Elektrolyseprozesszyklus 22 gestartet werden. Ein neuer Elektrolyseprozesszyklus (22) wird gestartet, wenn genügend Energie für einen Elektrolyseprozesszyklus 22 vorhanden ist und ausreichend Platz in den Speichertanks 24, 26 der Antriebsstofferzeugungsvorrichtung 10 vorhanden ist. Dazu wird in einem weiteren Verfahrensschritt 76 der Ladezustand eines nicht weiter dargestellten Energiespeichers der Antriebsstofferzeugungsvorrichtung 10 überwacht. Ferner wird ein Druck in den Speichertanks 24, 26 der Antriebsstofferzeugungsvorrichtung 10 überwacht. Anschließend wird in einer Verzweigung 78 überprüft, ob ein Schwellwert des Ladezustands des Energiespeichers der Antriebsstofferzeugungsvorrichtung 10 überschritten ist und ob ein Schwellwert des Drucks der Speichertanks 24, 26 der Antriebsstofferzeugungsvorrichtung 10 unterschritten wird. Ist der Schwellwert des Ladezustands des Energiespeichers der Antriebsstofferzeugungsvorrichtung 10 nicht überschritten oder Schwellwert des Drucks der Speichertanks 24, 26 der Antriebsstofferzeugungsvorrichtung 10 nicht unterschritten, wird der Verfahrensschritt 76 wiederholt. Ist der Schwellwert des Ladezustands des Energiespeichers der Antriebsstofferzeugungsvorrichtung 10 nicht überschritten oder Schwellwert des Drucks der Speichertanks 24, 26 der Antriebsstofferzeugungsvorrichtung 10 nicht unterschritten, wird ein neuer Elektrolyseprozesszyklus 22 gestartet und der Verfahrensschritt 54 wiederholt.

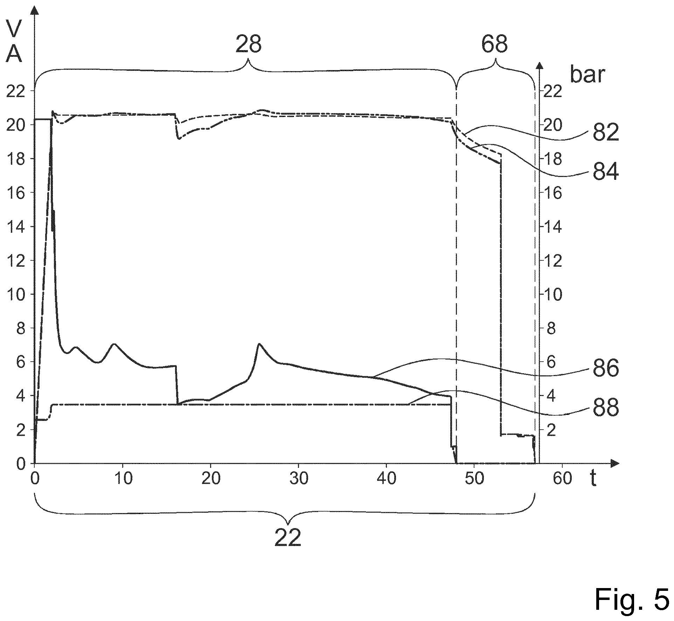

Fig. 5 zeigt ein beispielhaftes Diagramm eines Messprotokolls eines Wasserstoffdrucks 82 in dem ersten Fluidraum 36, eines Sauerstoffdrucks 84 in dem zweiten Fluidraum 38, einen fließenden Strom 86 der Elektrolysezelle 16 und eine anliegende Spannung 88 der Elektrolysezelle 16 über die Zeit während eines Elektrolyseprozesszyklus 22. Das Diagramm zeigt den Wasserstoffdruck 82 in dem ersten Fluidraum 36 sowie den Sauerstoffdruck 84 in dem zweiten Fluidraum 38 in bar über die Zeit t. Ferner zeigt das Diagramm den Strom 86 der Elektrolysezelle 16 in Amper A über die Zeit t. Des Weiteren zeigt das Diagramm die Spannung 88 der Elektrolysezelle 16 in Volt V über die Zeit t. Die dargestellte Zeitspanne stellt dabei einen Elektrolyseprozesszyklus 22 mit einem Elektrolyseprozess 28 sowie einer anschließenden Entlüftung des Verfahrensschritts 68 dar. Die Zeit t ist in Minuten aufgeführt.

## Patentansprüche

1. Raumflugkörper (12), insbesondere ein Satellit, mit einer Antriebseinheit (34), welche mit Wasserstoff und Sauerstoff betrieben wird und zu einer Manövrierung des Raumflugkörpers (12) dient und mit einer Antriebsstofferzeugungsvorrichtung (10), mit zumindest einem Elektrolyseur (14), welcher zu einer wiederkehrenden Erzeugung von Wasserstoff und Sauerstoff vorgesehen ist und zumindest eine Elektrolysezelle (16) aufweist, die zumindest einen alkalischen Elektrolyten (18) umfasst, wobei die Antriebsstofferzeugungsvorrichtung (10) zumindest einen ersten Speichertank (24) zu einer Speicherung des erzeugten Wasserstoffs und zumindest einen zweiten Speichertank (26) zu einer Speicherung des erzeugten Sauerstoffs aufweist, wobei die Antriebseinheit (34) bei Bedarf Gas für zumindest eine Schubdüse, über eine Leitung aus den beiden Speichertanks (24, 26), entnimmt, **dadurch gekennzeichnet, dass**
der zumindest eine Elektrolyseur (14) zumindest ein Wasserreservoir (20) aufweist, welches zu einer Zwischenspeicherung von Wasser für einen Elektrolyseprozesszyklus (22) vorgesehen ist, wobei das Wasserreservoir (20) zu einer Zwischenspeicherung genau der Menge an Wasser vorgesehen ist, wie sie für einen Elektrolyseprozesszyklus benötigt wird, wobei die Antriebsstofferzeugungsvorrichtung (10) zumindest ein erstes Druckausgleichsventil (60) aufweist, welches über eine Leitung mit dem Wasserreservoir (20) und mit einer Wasserstoffleitung (30) verbunden ist und zu einem Druckausgleich zwischen Wasser und Wasserstoff vorgesehen ist.

2. Raumflugkörper (12) nach Anspruch 1,
**dadurch gekennzeichnet, dass**
die zumindest eine Elektrolysezelle (16) von einer Matrixzelle gebildet ist, bei welcher die Elektrolyten in einer Matrix fixiert sind.

3. Raumflugkörper (12) nach Anspruch 1 oder 2,
**dadurch gekennzeichnet, dass**
das Wasserreservoir weniger als 30 g, insbesondere weniger als 10 g, Wasser fasst.

4. Verfahren zu einem Betrieb eines Raumflugkörpers (12) mit einer Antriebseinheit (34) und einer Antriebsstofferzeugungsvorrichtung (10) nach einem der vorhergehenden Ansprüche, wobei in zumindest einem Verfahrensschritt, insbesondere in einem Verfahrensschritt eines periodischen Betriebszyklus, Wasserstoff und Sauerstoff erzeugt wird, **dadurch gekennzeichnet, dass** die während eines Elektrolyseprozesszyklus (22) erzeugten Gase in die Speichertanks (24, 26) geführt werden, wobei zu Beginn eines Elektrolyseprozesszyklus (22) eine definierte Menge Wasser in ein Wasserreservoir (20) eines Elektrolyseurs (14) der Antriebsstofferzeugungsvorrichtung (10) eingebracht wird.

5. Verfahren nach Anspruch 4,
**dadurch gekennzeichnet, dass**
das Wasser aus dem Wasserreservoir (20) des Elektrolyseurs (14) bei niedrigem Druck der Elektrolysezelle (16) zugeführt wird, wobei der niedrige Druck einen absoluten Druck von maximal 2 bar aufweist.

6. Verfahren nach einem der Ansprüche 4 bis 5,
**dadurch gekennzeichnet, dass**
während des Elektrolyseprozesszyklus (22) Wasserstoff und Sauerstoff mit einem Druck von zumindest 30 bar erzeugt werden.

7. Verfahren nach einem der Ansprüche 4 bis 6,
**dadurch gekennzeichnet, dass**
ein Elektrolyseprozesszyklus (22) gestartet wird, wenn genügend Energie für einen Elektrolyseprozesszyklus (22) vorhanden ist und ausreichend Platz in den Speichertanks (24, 26) der Antriebsstofferzeugungsvorrichtung (10) vorhanden ist.

8. Verfahren nach einem der Ansprüche 4 bis 7,
**dadurch gekennzeichnet, dass**
die Durchführung unter Bedingungen reduzierter oder erhöhter Schwerkraft erfolgt.

9. Verfahren nach einem der Ansprüche 4 bis 8,
**dadurch gekennzeichnet, dass**
ein Elektrolyseprozess (28) in einem weiteren Verfahrensschritt (62) selbsttätig endet, wenn das Wasser in dem Wasserreservoir (20) verbraucht ist.

## Claims

1. Space flight body (12), in particular a satellite, with a drive unit (34) which is operated with hydrogen and oxygen and serves for a manoeuvring of the space flight body (12), and
with a propellant-generating device (10), with at least one electrolyser (14) which is configured for an iterative production of hydrogen and oxygen and comprises at least one electrolysis cell (16) having at least one alkaline electrolyte (18), wherein the propellant-generating device (10) comprises at least one first storage tank (24) for a storage of the produced hydrogen and at least one second storage tank (26) for a storage of the produced oxygen,
wherein if required the drive unit (34) retrieves gas for at least one jet nozzle from the two storage tanks (24, 26) via a duct,
**characterised in that** the at least one electrolyser (14) comprises at least one water reservoir (20), which is configured for an interim storage of water for an electrolysis process cycle (22), the water reservoir (20) being configured for an interim storage of precisely the quantity of water which is required for an electrolysis process cycle (22),
wherein the propellant-generating device (10) comprises at least one first pressure compensation valve (60) which is connected to the water reservoir (20) and to a hydrogen conduit (30) via a duct and which is configured for a pressure compensation between water and hydrogen.

2. Space flight body (12) according to claim 1,
**characterised in that** the at least one electrolysis cell (16) is realized by a matrix cell in which the electrolytes are fixated in a matrix.

3. Space flight body (12) according to claim 1 or 2,
**characterised in that** the water reservoir holds less than 30 g, in particular less than 10 g, of water.

4. Method for an operation of a space flight body (12) with a drive unit (34) and a propellant-generating device (10) according to one of the preceding claims, wherein in at least one method step, in particular in a method step of a periodical operation cycle, hydrogen and oxygen are produced,
**characterised in that** the gases produced during an electrolysis process cycle (22) are conveyed into the storage tanks (24, 26),
wherein at the start of an electrolysis process cycle (22) a defined quantity of water is introduced into a water reservoir (20) of an electrolyser (14) of the propellant-generating device (10).

5. Method according to claim 4,
**characterised in that** the water from the water reservoir (20) of the electrolyser (14) is fed to the electrolysis cell (16) under low pressure, the low pressure having an absolute pressure of maximally 2 bar.

6. Method according to one of claims 4 to 5,
**characterised in that** during the electrolysis process cycle (22) hydrogen and oxygen are produced with a pressure of at least 30 bar.

7. Method according to one of claims 4 to 6,
**characterised in that** the electrolysis process cycle (22) is started if there is a sufficient amount of energy for an electrolysis process cycle (22) and sufficient room in the storage tanks (24, 26) of the propellant-generating device (10).

8. Method according to one of claims 4 to 7,
**characterised in that** the implementation is effected under conditions of reduced or increased gravity.

9. Method according to one of claims 4 to 8,
**characterised in that** in a further method step (62) an electrolysis process (28) ends automatically when the water in the water reservoir (20) has been used up.

## Revendications

1. Véhicule spatial (12), en particulier un satellite,
avec une unité d'entraînement (34), qui est opérée à l'hydrogène et à l'oxygène et qui sert pour manœuvrer le véhicule spatial (12),
et avec un appareil de production d'ergol (10), avec au moins un électrolyseur (14) prévu pour une production itérative de l'hydrogène et de l'oxygène et comprenant au moins une cellule d'électrolyse (16) qui inclût au moins un électrolyte alcalin (18),
l'appareil de production d'ergol (10) comprenant au moins un premier réservoir de stockage (24) pour un stockage de l'hydrogène produit et au moins un deuxième réservoir de stockage (26) pour un stockage de l'oxygène produit,
l'unité d'entraînement (34) au besoin puisant du gaz pour au moins une tuyère propulsante des deux réservoirs de stockage (24, 26) par un conduit, **caractérisé en ce que**
l'au moins un électrolyseur (14) comprend au moins un réservoir d'eau (20) qui est prévu pour un stockage intermédiaire de l'eau pour un cycle de procès électrolytique (22),
le réservoir d'eau (20) étant prévu pour un stockage intermédiaire de précisément cette quantité de l'eau qui est requise pour un cycle de procès électrolytique, l'appareil de production d'ergol (10) comprenant au moins un premier valve à compensation de pression (60), qui est lié au réservoir d'eau (20) et à un conduit d'hydrogène (30) par le biais d'un conduit, et qui est prévu pour une compensation de pression entre l'eau et l'hydrogène.

2. Véhicule spatial selon la revendication 1,
**caractérisé en ce que** l'au moins une cellule électrolytique (16) est réalisée par une cellule de matrice, dans laquelle les électrolytes sont fixés en une matrice.

3. Véhicule spatial selon la revendication 1 ou 2,
**caractérisé en ce que** le réservoir d'eau a une capacité de moins de 30 g, notamment moins de 10 g, de l'eau.

4. Procédé d'une opération d'un véhicule spatial (12) avec une unité d'entraînement (34) et un appareil de production d'ergol (10) selon l'une quelconque des revendications précédentes,
où dans au moins une étape du procédé, en particulier dans une étape de procédé d'un cycle d'opération périodique, de l'hydrogène et de l'oxygène sont produits, **caractérisé en ce que** les gaz produits pendant un cycle de procès électrolytique (22) sont conduits dans les réservoirs de stockage (24, 26),
où au début d'un cycle de procès électrolytique (22) une quantité définie de l'eau est introduite dans un réservoir d'eau (20) d'un électrolyseur (14) de l'appareil de production d'ergol (10).

5. Procédé selon la revendication 4,
**caractérisé en ce que** l'eau du réservoir d'eau (20) de l'électrolyseur (14) est alimentée à la cellule électrolytique (16) sous pression basse, la pression basse ayant une pression absolue de maximalement 2 bar.

6. Procédé selon l'une des revendications 4 à 5,
**caractérisé en ce que** pendant le cycle de procès électrolytique (22), de l'hydrogène et de l'oxygène sont produits avec une pression d'au moins 30 bar.

7. Procédé selon l'une des revendications 4 à 6,
**caractérisé en ce qu'**un cycle de procès électrolytique (22) est démarré s'il y a suffisamment de l'énergie pour un cycle de procès électrolytique (22) et il y a suffisamment de place dans les réservoirs de stockage (24, 26) de l'appareil de production d'ergol (10).

8. Procédé selon l'une des revendications 4 à 7,
**caractérisé en ce que** l'exécution s'effectue sous conditions de gravité réduite ou augmentée.

9. Procédé selon l'une des revendications 4 à 8,
**caractérisé en ce que** dans un étape de procédé de plus (62), un procès électrolytique (28) se termine automatiquement si l'eau dans le réservoir d'eau est consommée.
